# EUROPEAN PATENT APPLICATION

(11) **EP 2 432 234 A1**
(43) Date of publication of application: **21.03.2012**
(21) Application number: 11163172.7
(22) Date of filing: 20.04.2011
(51) Int. Cl.: H04N 13/00, H04N 21/845, H04N 21/2387, H04N 21/6587, H04N 21/236, H04N 21/2343

(54) **Method of controlling trick modes and transport stream transmitting apparatus for implementing the same**

(30) Priority: 15.09.2010 KR 20100090457
(71) Applicant: Samsung Electronics Co., Ltd., Gyeonggi-do 506-762 (KR)
(72) Inventor: Oh, Keum-yong, Gyeonggi-do (KR)
(74) Representative: Bruce, Alexander Richard Henry

(57) **Abstract**

A method of controlling trick modes for a transport stream capable of easily determining a reproducing position corresponding to a trick mode execution mode on a transport stream of a 3D image is provided. The method includes, if a trick mode execution command for a transport stream is received, calculating a reproducing range on a first transport stream corresponding to a received trick mode execution command, calculating a reproducing range on a second transport stream based on a calculated reproduction range of the first transport stream, and controlling to transmit the first transport stream corresponding to the calculated reproducing range of the first transport stream and the second transport stream corresponding to the calculated reproducing range of the second transport stream.

## Description

The present invention relates to a method of controlling trick modes and a transport stream transmitting apparatus for implanting the same, and more particularly, to a method of controlling trick modes in case of transmitting two transport streams and a transport stream transmitting apparatus for implanting the same.

A data format of a moving picture experts group (MPEG) standard used as a compression and transmission method of a digital video is classified into a program stream (PS) and a transport stream (TS). The program stream is used to store a digital video into a storage medium having low error on transport and the transport stream having a predetermined packet length is used in digital broadcasting having relatively unstable transmission channels.

The current streaming service method using the transport steam controls one transport stream to transmit/receive the transport stream on the basis of a MPEG transmission/reception system.

Three-dimensional (3D) streaming service of the related art provides a left eye image and a right image not using two transport streams, but using one transport stream.

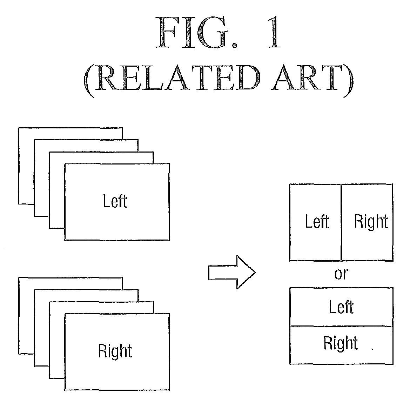

For example, as shown in FIG. 1, the left eye image and the right eye image are stacked in a frame by a side-by-side scheme or a top and bottom scheme and stacked frames are modulated and then transmitted.

In this instance, if a command for executing a trick mode such as multiple speed reproduction is input, the transport stream transmitting apparatus starts to transmit the transport stream from a position corresponding to the trick mode execution command.

However, when two transport streams are transmitted, the left eye image and the right eye image must be transmitted in different transport streams, respectively, and reproducing positions for the left eye image and the right eye image must be determined in the respective transport streams.

One or more exemplary embodiments may overcome the above disadvantages and other disadvantages not described above. However, it is understood that one or more exemplary embodiment are not required to overcome the disadvantages described above, and may not overcome any of the problems described above.

One or more exemplary embodiments provide a method of controlling trick modes for a transport stream capable of easily determining a reproduction position for a trick mode execution command on a transport stream of a three-dimensional (3D) image and a transport stream transmitting apparatus implanting the same.

According to an aspect of an exemplary embodiment, there is provided a method of controlling trick modes for a transport stream. The method may include: if a trick mode execution command for the transport stream is received, calculating a reproducing range on a first transport stream corresponding to a received trick mode execution command; calculating a reproducing range on a second transport stream based on a calculated reproduction range of the first transport stream; and controlling to transmit the first transport stream corresponding to the calculated reproducing range of the first transport stream and the second transport stream corresponding to the calculated reproducing range of the second transport stream.

The trick mode may include at least one of a trick mode for a reproduction speed of the transport stream, a chapter skip mode, a title skip mode, a time search mode and a screen skip mode.

In an exemplary embodiment, the first transport stream may be a transport stream corresponding to a left eye image signal of a 3D transport stream and the second transport stream may be a transport stream corresponding to a right eye image signal of the 3D transport stream.

In another exemplary embodiment, the first transport stream may be a transport stream corresponding to a right eye image signal of a 3D transport stream and the second transport stream may be a transport stream corresponding to a left eye image signal of the 3D transport stream.

The first transport stream may include at least one of audio data, caption data, and application data, but is not limited thereto.

The second transport stream may include at least one of an offset value for the first transport stream and additional data, but is not limited thereto.

The first transport stream and the second transport stream may be alternatively reproduced.

The reproducing range of the first transport stream may be a starting point and an ending point of a title or a starting point and an ending point demanded by or requested by a user.

In an exemplary embodiment, the reproducing range of the second transport stream may be calculated based on a presentation time stamp (PTS) or a source packet number (SPN).

In another exemplary embodiment, the reproducing range of the second transport stream may be calculated based on a file address of the transport stream or group of picture identification (GOP ID).

According to an aspect of another exemplary embodiment, there is provided a transport stream transmitting apparatus. The transport stream transmitting apparatus may include: a first transport stream transmitting unit which transmits a first transport stream; a second transport stream transmitting unit which transmits a second transport stream; and a controller which, if a trick mode execution command for a transport stream is received, calculates a reproducing range on a first transport stream corresponding to a received trick mode execution command, calculates a reproducing range on a second transport stream based on a calculated reproduction range of the first transport stream, and controls the first transport stream transmitting unit and the second transport stream transmitting unit to transmit the first transport stream corresponding to the calculated reproducing range of the first transport stream and transmit the second transport stream corresponding to the calculated reproducing range of the second transport stream.

The trick mode may include at least one of a trick mode for a reproduction speed of the transport stream, a chapter skip mode, a title skip mode, a time search mode and a screen skip mode.

In an exemplary embodiment, the first transport stream may be a transport stream corresponding to a left eye image signal of a 3D transport stream and the second transport stream may be a transport stream corresponding to a right eye image signal of the 3D transport stream.

In another exemplary embodiment, the first transport stream may be a transport stream corresponding to a right eye image signal of a 3D transport stream and the second transport stream may be a transport stream corresponding to a left eye image signal of the 3D transport stream.

The first transport stream may include at least one of audio data, caption data, and application data, but is not limited thereto.

The second transport stream may include at least one of an offset value for the first transport stream and additional data, but is not limited thereto.

The first transport stream and the second transport stream may be alternatively reproduced.

The reproducing range of the first transport stream may be a starting point and an ending point of a title or a starting point and an ending point demanded by a user.

In an exemplary embodiment, the reproducing range of the second transport stream may be calculated based on presentation time stamp (PTS) or source packet number (SPN).

In another exemplary embodiment, the reproducing range of the second transport stream may be calculated based on a file address of the transport stream or group of picture identification (GOP ID).

As described above, according to the exemplary embodiments, the method of controlling trick modes for a transport stream and the transport stream transmitting apparatus of implementing the same which when a 3D image is transmitted in two transport streams, calculates a reproducing range of each transport stream if a trick mode execution command is received to easily determine a reproduction position corresponding to the trick mode execution command.

Additional aspects of the exemplary embodiments will be set forth in the detailed description, will be obvious from the detailed description, or may be learned by practicing the exemplary embodiments.

The above and/or other aspects will be more apparent by describing in detail exemplary embodiments, with reference to the accompanying drawings, in which:
FIG. 1 is a view illustrating a method of transmitting a transport stream (TS) using one transport stream of the related art;
FIG. 2 is a schematic block diagram illustrating a streaming service system including a transport stream transmitting apparatus according to an exemplary embodiment;
FIG. 3 is a view illustrating a method of determining a reproduction position of a transport stream in a transport stream transmitting apparatus according to an exemplary embodiment;
FIG. 4 is a view illustrating a method of executing a trick mode for a transport stream in a streaming service system including a transport stream transmitting apparatus according to an exemplary embodiment;
FIGS. 5 to 8 are views illustrating examples of a markup language such as an extensible markup language (XML) used for determining a reproducing range of a transport stream in a transport stream transmitting apparatus according to an exemplary embodiment; and
FIG. 9 is a flowchart illustrating a method of controlling trick modes for a transport stream according to an exemplary embodiment.

Hereinafter, exemplary embodiments will be described in greater detail with reference to the accompanying drawings.

In the following description, same reference numerals are used for the same elements when they are depicted in different drawings. The matters defined in the description, such as detailed construction and elements, are provided to assist in a comprehensive understanding of the exemplary embodiments. Thus, it is apparent that the exemplary embodiments can be carried out without those specifically defined matters. Also, functions or elements known in the related art are not described in detail since they would obscure the exemplary embodiments with unnecessary detail.

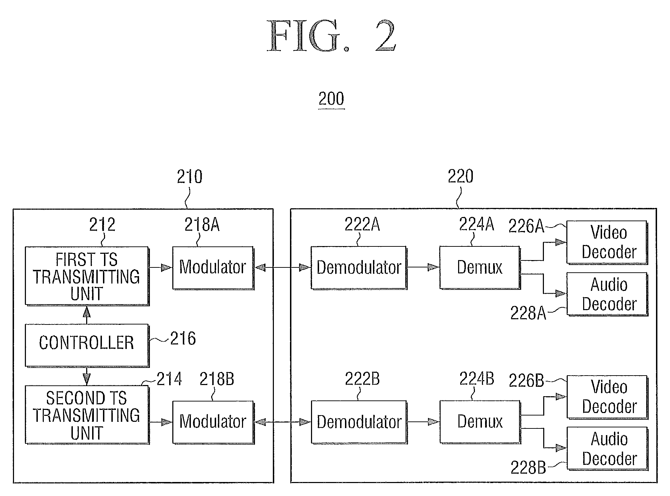

FIG. 2 is a schematic block diagram of a streaming service system including a transport stream transmitting apparatus according to an exemplary embodiment. As shown in FIG. 2, a streaming service system 200 includes a transport stream transmitting apparatus 210 and a transport stream reproducing apparatus 220.

The transport stream transmitting apparatus 210 includes a first transport stream transmitting unit 212, a second transport stream transmitting unit 214, a controller 216, and modulators 218A and 218B.

The first transport stream transmitting unit 212 and the second transport stream transmitting unit 214 transmit a first transport stream and a second transport stream, respectively.

In other words, the transport stream transmitting apparatus according to an exemplary embodiment may use two transport streams (TSs) for transmitting a three-dimensional (3D) digital video. The first transport stream may correspond to a base transport stream and the second transport stream may correspond to a dependant transport stream.

The first transport stream is data which is the basis of an image signal and may be used for reproduction of a 3D image signal as well as reproduction of two-dimensional (2D) image signal. Accordingly, the second transport stream is transmitted by adding an offset value to the first transport stream and the first and second transport stream are alternatively reproduced in the transport stream reproducing apparatus 220 so that the image signal is reproduced in a 3D format.

If the controller 216 receives a trick mode execution command for a transport stream, the controller 216 calculates a reproducing range on the first transport stream corresponding to the received trick mode execution command, calculates a reproducing range on the second transport stream on the basis of the calculated reproducing range of the first transport stream, and controls the first transport stream transmitting unit 212 and the second transport stream transmitting unit 214 to transmit the first transport stream corresponding to the calculated reproducing range of the first transport stream and the second transport stream corresponding to the calculated reproducing range of the second transport stream.

If the transport stream transmitting apparatus 210 transmits two transport streams, the controller 216 regards the first transport stream corresponding to a left eye image or a right eye image as a base transport stream and the second transport stream corresponding to an image opposite to the image of the first transport stream as a dependant transport stream, and has to determine a reproducing range of the dependant transport stream according to a reproducing range of the base transport stream because the data amount of the base transport stream is different from that of the dependant transport stream.

Herein, the trick mode may include at least one of a trick mode for a reproducing speed of a transport stream, a chapter skip mode, a title skip mode, a time search mode, and a screen skip mode.

In other words, in reproducing the transport stream, the trick mode may be a trick mode for a reproducing speed at which the transport stream is quickly or slowly reproduced in a forward direction or a backward direction, a chapter skip mode for skip-reproducing the transport stream in a chapter unit, a title skip mode for skip-reproducing the transport stream in a title unit, a screen skip mode for skip-reproducing the transport stream in a screen unit, or a time search mode for reproducing the transport stream in a time search scheme.

In an exemplary embodiment, the first transport stream may be a transport stream corresponding to a left eye image signal of a 3D transport stream and the second transport stream may be a transport stream corresponding to a right eye image signal of the 3D transport stream.

In another exemplary embodiment, the first transport stream may be a transport stream corresponding to a right eye image signal of a 3D transport stream and the second transport stream may be a transport stream corresponding to a left eye image signal of the 3D transport stream.

In other words, if the first transport stream corresponding to the a base transport stream is a transport stream corresponding to a left eye image or a right eye image, the second transport stream corresponding to the dependant transport stream may be a transport stream corresponding to an image opposite to the image of the first transport stream.

In an exemplary embodiment, the first transport stream may include at least one of audio data, caption data, and application data, but is not limited thereto.

In an exemplary embodiment, the second transport stream may include at least one of an offset value for the first transport stream and additional data, but is not limited thereto.

In other words, because a data amount of the second transport stream corresponding to the dependant transport stream is less than that of the first transport stream corresponding to the base transport stream, the first transport stream includes data for an original image signal and the second transport stream includes additional data for the original image signal.

In an exemplary embodiment, the reproducing range of the first transport stream may be a starting point and an ending point of a title or a starting point and an ending point demanded by a user.

In other words, if the trick mode execution command is in a title unit, a starting point and an ending point of a title may be the reproducing range and if the execution command is based on a user's demand or request, a starting point and an ending point of the request by the user may be the reproducing range.

In an exemplary embodiment, the reproducing range of the second transport stream may be calculated based on a presentation time stamp (PTS) or a source packet number (SPN). In another exemplary embodiment, the reproducing range of the second transport stream may be calculated based on a file address of the transport stream or group of picture identification (GOP ID).

Herein, the PTS means information for designating a time when the video signal or the audio signal is to be output after the video signal or the audio signal is decoded in a receiver so as to solve a phenomenon (a lip sync mismatch phenomenon) that occurs when the video signal does not coincide with the audio signal in the receiver due to a considerably large time required in compressing and decompressing the video signal as compared with a time required in compressing and decompressing the audio signal, when the video signal and an audio signal are compressed with a moving picture experts group2 (MPEG-2) standard and transmitted. In addition, when the video signal and the audio signal are recorded in a transport stream format, address information may be managed with SPN.

For example, the reproducing range of the second transport stream may be calculated on the basis of PTS or, alternatively, SPN based on chip ID, title number, or the like may be used.

Alternatively, the reproducing range of the second transport stream may be calculated using a section table information type which is defined in a markup language such as an extensible markup language (XML) or MPEG-2. More specifically, an application type of a section table, SPN information, program information including an audio/video stream information, extent information, or the like.

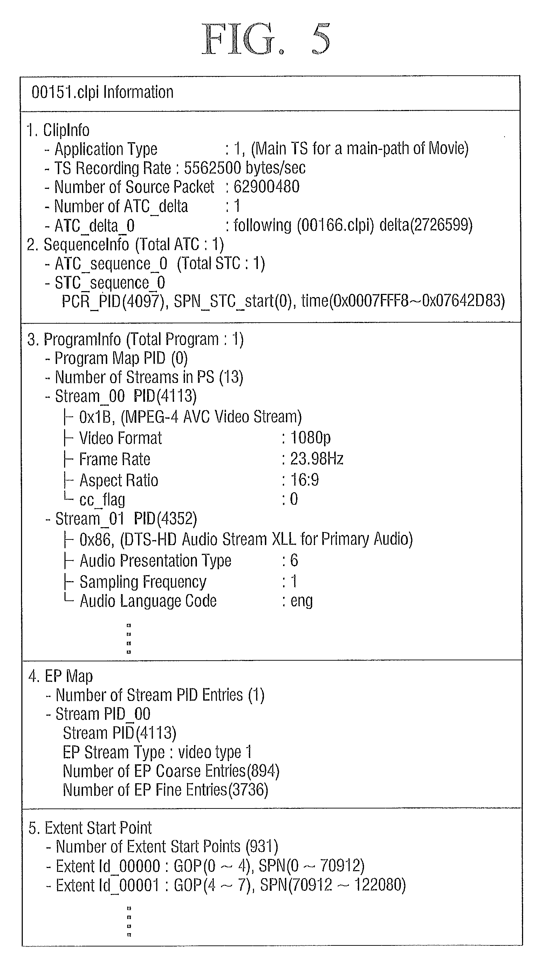

Description for the markup language such as XML will be described in further detail with reference to FIGS. 5 to 8 later.

The modulator 218A modulates the first transport stream transmitted by the first transport stream transmitting unit 212, and modulator 218B modulates the second transport stream transmitted by the second transport stream transmitting unit 214 with various modulation methods.

Herein, the transport stream transmitting apparatus 210 may not include the modulators 218a and 218B, and in this case, the first transport stream transmitting unit 212 and the second transport steam transmitting unit 214 may perform the functions of the modulator.

In addition, the modulators 218A and 218B may be included corresponding to the first transport stream transmitting unit 212 and the second transport stream transmitting unit 214. In other words, one modulator may be included corresponding to the first transport stream transmitting unit 212 and the other modulator may be included corresponding to the second transport stream transmitting unit 214.

In an exemplary embodiment, the modulator 218A may modulate the first transport stream and the modulator 218B may modulate the second transport stream using various methods such as amplitude-shift keying (ASK), frequency-shift keying (FSK), phase-shift keying (PSK), quadrature amplitude modulation (QAM), or the like.

The transport stream reproducing apparatus 220 includes a first demodulator 222A, a second demodulator 222B, a first demultiplexer 224A, and a second demultiplexer 224B, video decoders 226A and 226B and audio decoders 228A and 228B.

In an exemplary embodiment, the transport stream reproducing apparatus 220 may be a personal video recorder (PVR), or a digital video recorder (DVR), but is not limited thereto.

Herein, the PVR means a personal video recording apparatus which may store an image signal in a hard disc. In addition, the PVR is a digital recording apparatus which may store information in a hard disc and reproduce the information from the hard disc differently from a video cassette recorder (VCR) which stores an image in a magnetic tape. The PVR is a next-generation recording apparatus which can recode a broadcasting program for constant time according to capacity thereof via a hard disc drive (HDD) built in a setup box or a television main body without a VCR.

Accordingly, if a channel is selected, an image which is currently being broadcastg is automatically stored in the hard disc drive and is simultaneously reproduced. If a stop button is pressed and then a reproduction button is pressed, a stored image is reproduced again at a time point where the image is stopped. Therefore, it is possible to watch the currently broadcast program and reproduce an image with in a slow motion mode or skip a boring portion of the broadcast by a trick mode function, or easily search or edit a desired portion.

The DVR is an apparatus which was developed to solve the problems of degradation of image quality and inconvenience in use such as tape change due to using a method of repeatedly performing a recording operation several times that occurs in VCRs of the related art. An HDD or a digital video disc (DVD) is used instead of a video tape so that it is easy to reproduce or search displayed images as well as stored image signals so that it is easy to edit and transmit the image signal. In addition, the DVR is a high resolution recording system scheme which converts an analog signal, for example, an image data input in a surveillance camera, into a digital signal, and compresses and decompressses the image with MPEG standard (which is a moving picture international compression standard) so that it is possible to record and reproduce the image to be watched. DVRs also allow images to be recorded and reproduced in high quality for extended periods.

In an exemplary embodiment, the transport stream reproducing apparatus 220 may alternatively reproduce the first transport stream and the second transport stream.

In other words, the transport stream reproducing apparatus 220 alternatively reproduces the first transport stream and the second transport stream corresponding to a left eye image or a right eye image to reproduce a 3D image.

The demodulators 222A and 222B demodulate the signals received from the transport stream transmitting apparatus 210 into demodulated transport streams.

Herein, the demodulators 222A and 222B may be included corresponding to the first transport stream and the second transport stream.

Demultiplexers 224A and 224B analyze the transport streams demodulated by the demodulators 222A and 222B, separate the transport streams into video data and audio data, and provide the separated video data and audio data to the video decoders 226A and 226B and the audio decoders 228A and 228B, respectively.

Herein, the demultiplexers 224A and 224B may be included corresponding to the demodulators 222A and 222B of the transport stream reproducing apparatus 220, respectively. Alternatively, one demultiplexer may perform the function differently from FIG. 2.

In addition, the demultiplexers 224A and 224B may separate audio data and video data via analysis of a packet identifier of a transport stream.

The video decoders 226A and 226B decode the video data provided from the demultiplexers 224A and 224B and the audio decoders 228A and 228B decode the audio data provided from the demultiplexers 224A and 224B.

For example, the transport stream reproducing apparatus 220 receives a transport stream via a predetermined network interface. However, when a reproducing mode is a 3D mode, the transport stream reproducing apparatus 220 may determine whether or not two transport streams are received.

In addition, the video decoder may set codec such as H.264, advanced video coding (AVC), multiview video coding (MVC), or the like and set the demultiplexer to start a driving process. The video decoder may set program ID (PID) corresponding to a video to start a processing of video data and audio data and display decoded data.

If a user demands a trick mode execution command for a trick mode or a reproducing mode, the transport stream reproducing apparatus 220 may transmit a command code such as a trick mode, chapter skip, title skip, or the like to the transport stream transmitting apparatus 210.

If the transport stream reproducing apparatus 220 retains information for a base transport stream and a dependant transport stream, the transport stream reproducing apparatus 220 may perform calculation of reproducing ranges for the base transport stream and the dependant transport stream. In this case, the transport stream reproducing apparatus 220 may transmit information such as TSID, request PTS information, GOP ID, extent ID, or the like as reproducing position information for base transport stream and the dependant transport stream to the transport stream transmitting apparatus 210.

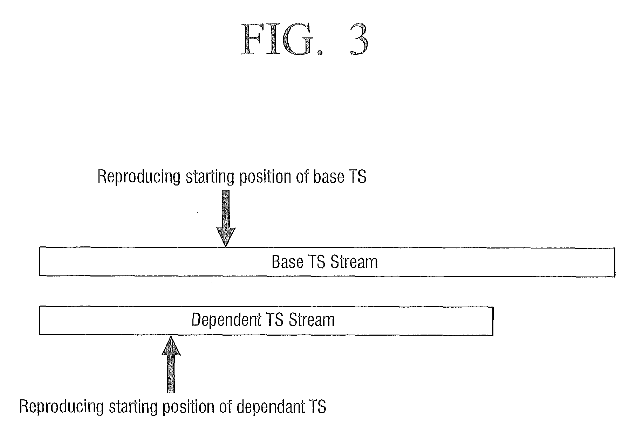

FIG. 3 is a view illustrating a method of determining a reproducing position of a transport stream in a transport stream transmitting apparatus according to an exemplary embodiment.

As shown in FIG. 3, for example, if two transport streams are transmitted, the transport stream transmitting apparatus may calculate a reproducing range of a base transport stream to acquire a reproducing starting position of the base transport stream and calculate a reproducing range of a dependant transport stream according to the reproducing starting position of the base transport stream to acquire a reproducing starting position of the dependant transport stream. In general, since a data amount of the dependant transport stream is less than that of the base transport stream, it is understood that the reproducing starting position of the dependant transport stream is in advance as compared with the reproducing starting position of the base transport stream.

If the reproducing ranges of the transport streams are calculated and transmitted in the transport stream reproducing apparatus 220, the transport stream transmitting apparatus 210 may transmit the base transport stream and the dependant transport stream from the reproducing starting positions of the base transport stream and the dependant transport stream considering the reproducing ranges of the transport streams calculated by the transport stream reproducing apparatus 220 and a characteristic value.

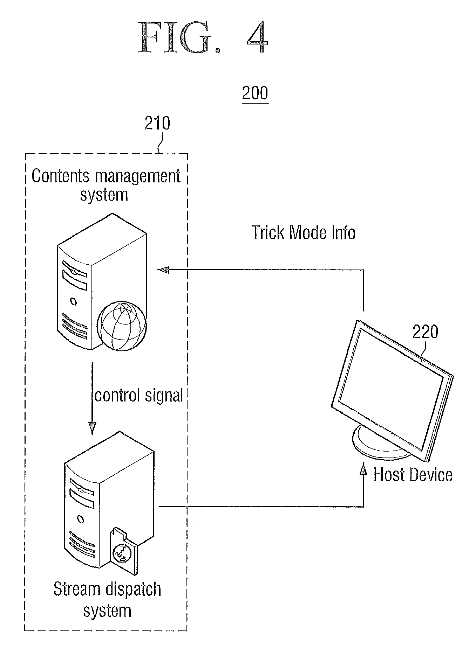

FIG. 4 is a view illustrating a method of executing a trick mode for a transport stream in a streaming service system including a transport stream transmitting apparatus according to an exemplary embodiment.

For example, a streaming service system including a transport stream transmitting apparatus according to an exemplary embodiment may include a transport stream transmitting apparatus 210 and a transport stream reproducing apparatus 220, as shown in FIG. 4.

The transport stream transmitting apparatus 210 may be divided into a contents management system and a stream dispatch system and the controller 216 of the transmission stream transmitting apparatus 210 corresponds to the contents management system. The contents management system may be provided within one apparatus with the stream dispatch system or may be provided in a separate apparatus.

The transport stream reproducing apparatus 220 corresponds to a host device and transmits a trick mode information Trick Mode Info corresponding to a trick mode execution command of the host device to the contents management system. The contents management system analyses the trick mode information to select a transport stream to be transmitted and calculates reproducing ranges of a base transport stream and a dependant transport stream to be transmitted, and transmits a control signal to the stream dispatch system so that the base transport stream and the dependant transport stream corresponding to the calculated reproducing ranges are transmitted. Thus, the stream dispatch system transmits the transport streams to the host device according to the control signal of the contents management system.

FIGS. 5 to 8 are views illustrating examples of a markup language such as XML used for determining a reproducing range of a transport stream in a transport stream transmitting apparatus according to an exemplary embodiment.

That is, it is understood that a reproducing range of a transport stream is determined by using a markup language such as XML or section table information defined in MPEG-2 in a transport stream transmitting apparatus according to an exemplary embodiment. The section table information may include application type information, source packet number information, program information (PID) including audio and video stream information, extent ID, or the like.

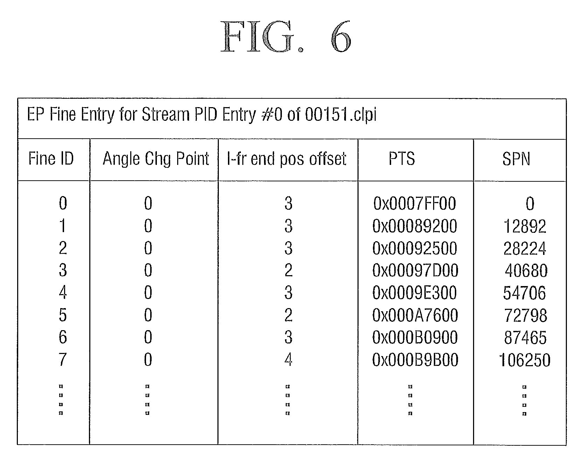

FIG. 5 illustrates clip information of a base transport stream constituted of a clip info file (*.clip) one-to-one corresponding to a base transport stream file. The clip info file records property information of the base transport stream file corresponding thereto and time information. The clip information may correspond to mapping information in which PTS one-to-one corresponds to SPN by an entry point map method as shown in FIG. 6.

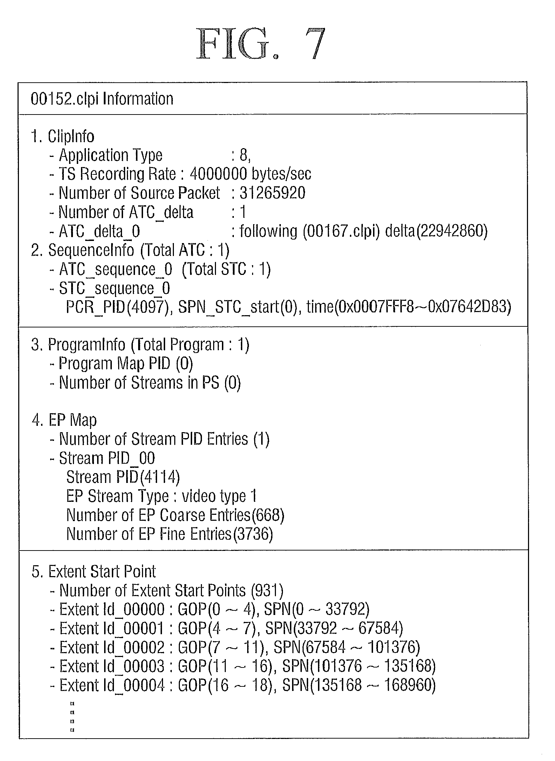

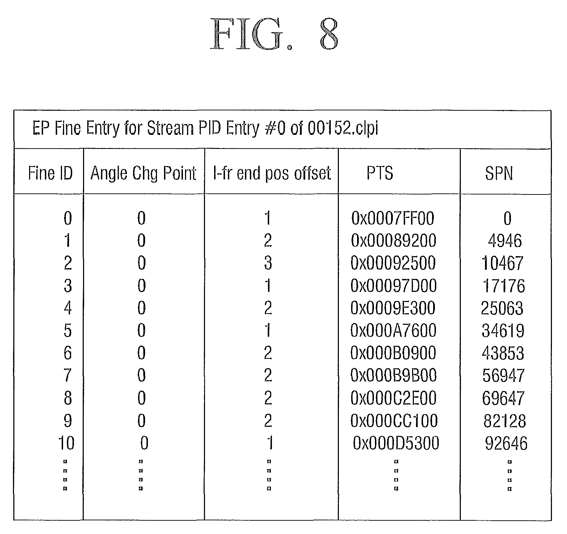

FIG. 7 illustrates clip information of a base transport stream constituted of a clip info file (*.clip) one-to-one corresponding to the dependant transport stream file. The clip info file records property information of the dependant transport stream file corresponding thereto and time information. The clip information may correspond to mapping information in which PTS one-to-one corresponds to SPN by an entry point map method as shown in FIG. 8.

On the other hand, it is assumed that clip No. "151" is transmitted to a base transport stream as shown in FIG. 5 and the clip No. "152" dispatches a dependant transport stream and a method of calculating reproducing ranges of the base transport stream and the dependant transport stream will be described hereinafter.

For example, as shown in FIG. 6, it is understood that if PTS must start to be reproduced from "0x000B9B00", the base transport stream must start to be reproduced from "106250" on SPN.

As shown in FIG. 8, it is understood that if PTS must start to be reproduced from "0x000B9B00", when it is converted as SPN, the dependant transport stream must start to be reproduced from "56947" on SPN.

As described above, although SPN is converted, it is necessary to convert addresses of files stored to transmit the transport streams. In FIGS. 5 to 8, SPN designating 192 bytes is exemplified so that if 192 bytes are applied to each SPN, it is possible to acquire addresses of files to be actually transmitted.

Although FIGS. 5 to 8 illustrate a method of obtaining SPN on the basis of PTS, the SPN may be differently calculated according to kinds of meta data of the transport stream. For example, the meta data may be an address of a file other than the SPN, a GOP unit such as GOP ID, or index information to calculate the dependant transport stream on the basis of the base transport stream.

In this case, if the SPN is calculated by another method using GOP ID or index ID, is the SPN is converted into a file address by a predetermined rule so that the transport stream is transmitted.

In case of transmitting the transport streams, each file or stream data is modulated via the modulators, the modulated data is transmitted via a designated network. Herein, in case of a cable modem, a file and data are modulated via a QAM method and if another network exists, it is possible to change a modulation method according to corresponding network situations to transmit the transport streams.

If a 3D image is transmitted in two transport streams, when a trick mode execution command is received, the transport stream transmitting apparatus according to an exemplary embodiment calculates reproducing ranges of the transport streams to easily determine reproducing positions corresponding to the trick mode execution command, thereby to increase reproducing efficiency of the 3D image in executing the trick mode.

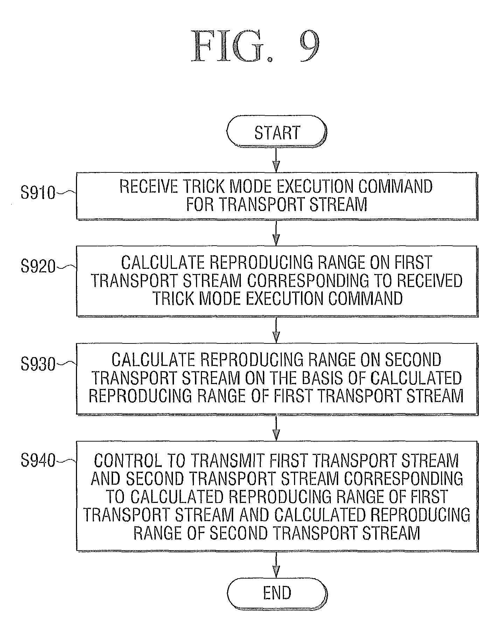

FIG. 9 is a flow chart illustrating a method of controlling trick modes for a transport stream according to an exemplary embodiment.

First, the streaming service system receives a trick mode execution command for a transport stream (operation S910).

Herein, the trick mode may include at least one of a trick mode for a reproduction speed of the transport stream, a chapter skip mode, a title skip mode, a time search mode and a screen skip mode.

In other words, in reproducing the transport stream, the trick mode may be a trick mode for a reproducing speed at which the transport stream is quickly or slowly reproduced in a forward direction or a backward direction, a chapter skip mode for skip-reproducing the transport stream in a chapter unit, a title skip mode for skip-reproducing the transport stream in a title unit, a screen skip mode for skip-reproducing the transport stream in a screen unit, or a time search mode for producing the transport stream in a time search scheme.

Next, the streaming service system calculates a reproducing range on a first transport stream corresponding to the received trick mode execution command (operation S920).

The first transport stream is data which is the basis of an image signal and may be used for reproduction of a 3D image signal as well as reproduction of a 2D image signal. Accordingly, a second transport stream to be described later is transmitted by adding an offset value to the first transport stream and the first and second transport stream are alternatively reproduced in the transport stream reproducing apparatus 220 so that the image signal is reproduced in a 3D type.

Next, the streaming service system calculates a reproducing range on a second transport stream on the basis of the calculated reproducing range of the first transport stream (operation S930).

In an exemplary embodiment, the first transport stream may be a transport stream corresponding to a left eye image signal of a 3D transport stream and the second transport stream may be a transport stream corresponding to a right eye image signal of the 3D transport stream.

In another exemplary embodiment, the first transport stream may be a transport stream corresponding to a right eye image signal of a 3D transport stream and the second transport stream may be a transport stream corresponding to a left eye image signal of the 3D transport stream.

In other words, if the first transport stream corresponding to the a base transport stream is a transport stream corresponding to a left eye image or a right eye image, the second transport stream corresponding to the dependant transport stream may be a transport stream corresponding to an image opposite to the image of the first transport stream.

The first transport stream may include at least one of audio data, caption data, and application data. The second transport stream may include at least one of an offset value for the first transport stream and additional data.

In other words, because a data amount of the second transport stream corresponding to the dependant transport stream is less than that of the first transport stream corresponding to the base transport stream, the first transport stream includes data for an original image signal and the second transport stream includes additional data for the original image signal.

Finally, the streaming service system controls to transmit the first transport stream corresponding to the calculated reproducing range of the first transport stream and the second transport stream corresponding to the calculated reproducing range of the second transport stream (operation S940).

The reproducing range of the first transport stream may be a starting point and an ending point of a title or a starting point and an ending point demanded by a user.

In other words, if the trick mode execution command is in a title unit, a starting point and an ending point of a title may be the reproducing range and if a user demand or request is received, a starting point and an ending point of the request of the user may be the reproducing range.

In an exemplary embodiment, the first transport stream and the second transport stream may be alternatively reproduced.

In other words, the streaming service system reproduces the first transport stream and the second transport stream corresponding to a left eye image and a right eye image to reproduce a 3D image.

In an exemplary embodiment, the reproducing range of the second transport stream may be calculated based on a presentation time stamp (PTS) or a source packet number (SPN). In another exemplary embodiment, the reproducing range of the second transport stream may be calculated based on a file address of the transport stream or group of picture identification (GOP ID).

The reason for controlling to transmit the first transport stream and second transport stream corresponding to the calculated reproducing range of the first transport stream and the calculated reproducing range of the second transport stream is because if two transport streams are transmitted, the first transport stream corresponding to a left eye image or a right eye image is regarded as a base transport stream, the second transport stream corresponding to an image opposite to the image of the first transport stream is regarded as a dependant transport stream, and the streaming service system determines a reproducing range of the dependant transport stream according to a reproducing range of the base transport stream due to different data amounts of the base transport stream and the dependant transport stream.

If a 3D image is transmitted in two transport streams, when a trick mode execution command is received, the method of controlling trick modes for a transport stream according to an exemplary embodiment calculates reproducing ranges of the transport streams to easily determine reproducing positions corresponding to the trick mode execution command, and thereby increases reproducing efficiency of the 3D image in executing the trick mode.

The above-described method of controlling trick modes for a transport stream is embodied in a program command type performable via various computers so that it is possible to store the transport stream in a computer readable recording medium. At this time, the computer readable recording medium may include a program command, a data file, a data structure or a combination thereof. The program command recorded in the recording medium may be a command which is specially designed and constituted for the exemplary embodiments or a usable program known by persons skilled in the computer software art.

The computer readable recording medium includes a hardware device specially configured to store and execute a program command including a magnetic media such as a hard disc, a floppy disc and a magnetic tape, an optical media such as CD-ROM and DVD, a magneto-optical media such as a floptical disc, a ROM, a RAM and a flash memory.

In addition, the program command includes a mechanical code formed by a compiler as well as a high language code executable by a computer using an interpreter. The above described hardware device may be constituted to operate one or more modules for performing an operation of the exemplary embodiment and vice versa.

The foregoing exemplary embodiments and advantages are merely exemplary and are not to be construed as limiting the present inventive concept. The exemplary embodiments can be readily applied to other types of apparatuses. Also, the description of the exemplary embodiments is intended to be illustrative, and not to limit the scope of the claims, and many alternatives, modifications, and variations will be apparent to those skilled in the art.

## Claims

1. A method of controlling trick modes for a transport stream, the method comprising:
determining if a trick mode execution command for the transport stream is received;
calculating a reproducing range on a first transport stream corresponding to the received trick mode execution command;
calculating a reproducing range on a second transport stream based on the calculated reproduction range of the first transport stream; and
controlling transmitting of the first transport stream corresponding to the calculated reproducing range of the first transport stream and the second transport stream corresponding to the calculated reproducing range of the second transport stream.

2. The method as claimed in claim 1, wherein the trick mode includes at least one of a trick mode for a reproduction speed of the transport stream, a chapter skip mode, a title skip mode, a time search mode and a screen skip mode,
wherein the first transport stream is a transport stream corresponding to a left eye image signal of a three-dimensional (3D) transport stream and the second transport stream is a transport stream corresponding to a right eye image signal of the 3D transport stream.

3. The method as claimed in claim 1, wherein the first transport stream is a transport stream corresponding to a right eye image signal of a three-dimensional (3D) transport stream and the second transport stream is a transport stream corresponding to a left eye image signal of the 3D transport stream.

4. The method as claimed in claim 1, wherein the first transport stream includes at least one of audio data, caption data, and application data,
wherein the second transport stream includes at least one of an offset value for the first transport stream and additional data,
wherein the first transport stream and the second transport stream are alternatively reproduced.

5. The method as claimed in claim 1, wherein the reproducing range of the first transport stream is at least one of a starting point and an ending point of a title, and a starting point and an ending point requested by a user,
wherein the reproducing range of the second transport stream is calculated based on a presentation time stamp (PTS) or a source packet number (SPN).

6. The method as claimed in claim 1, wherein the reproducing range of the second transport stream is calculated based on at least one of a file address of the transport stream and group of picture identification (GOP ID).

7. A transport stream transmitting apparatus, comprising:
a first transport stream transmitting unit which transmits a first transport stream;
a second transport stream transmitting unit which transmits a second transport stream; and
a controller which calculates a reproducing range on the first transport stream corresponding to a received trick mode execution command, calculates a reproducing range on the second transport stream based on a calculated reproduction range of the first transport stream, and controls the first transport stream transmitting unit and the second transport stream transmitting unit to transmit the first transport stream corresponding to the calculated reproducing range of the first transport stream and the second transport stream corresponding to the calculated reproducing range of the second transport stream.

8. The transport stream transmitting apparatus as claimed in claim 7, wherein the trick mode includes at least one of a trick mode for a reproduction speed of the transport stream, a chapter skip mode, a title skip mode, a time search mode and a screen skip mode

9. The transport stream transmitting apparatus as claimed in claim 7, wherein the first transport stream is a transport stream corresponding to a left eye image signal of a three-dimensional (3D) transport stream and the second transport stream is a transport stream corresponding to a right eye image signal of the 3D transport stream.

10. The transport stream transmitting apparatus as claimed in claim 7, wherein the first transport stream is a transport stream corresponding to a right eye image signal of a three-dimensional (3D) transport stream and the second transport stream is a transport stream corresponding to a left eye image signal of the 3D transport stream.

11. The transport stream transmitting apparatus as claimed in claim 7, wherein first transport stream includes at least one of audio data, caption data, and application data.

12. The transport stream transmitting apparatus as claimed in claim 7, wherein the second transport stream includes at least one of an offset value for the first transport stream and additional data.

13. The transport stream transmitting apparatus as claimed in claim 7, wherein first transport stream and the second transport stream are alternatively reproduced.

14. The transport stream transmitting apparatus as claimed in claim 7, wherein the reproducing range of the first transport stream is at least one of a starting point and an ending point of a title, and a starting point and an ending point requested by a user,
wherein the reproducing range of the second transport stream is calculated based on a presentation time stamp (PTS) or a source packet number (SPN).

15. The transport stream transmitting apparatus as claimed in claim 7, wherein the reproducing range of the second transport stream is calculated based on at least one of a file address of the transport stream and group of picture identification (GOP ID).
